# EUROPEAN PATENT SPECIFICATION

(11) **EP 2 336 597 B1**
(45) Date of publication and mention of the grant of the patent: **18.12.2013**
(21) Application number: 09817778.5
(22) Date of filing: 29.09.2009
(51) Int. Cl.: C08G 77/28, B60G 21/055, F16F 1/36, F16F 1/38, B60G 7/02

(54) **VIBRATION-DAMPING RUBBER MEMBER AND PROCESS FOR PRODUCING SAME**
VIBRATIONSDÄMPFENDES GUMMIELEMENT UND HERSTELLUNGSVERFAHREN DAFÜR
ELÉMENT ANTIVIBRATOIRE EN CAOUTCHOUC ET SON PROCÉDÉ DE PRODUCTION

(30) Priority: 30.09.2008 JP 2008254926
(43) Date of publication of application: 22.06.2011
(73) Proprietor: Tokai Rubber Industries, Ltd., Komaki-shi, Aichi 485-8550 (JP); STT Inc., Shinagawa-ku Tokyo 141-0031 (JP)
(72) Inventor: NAKAMURA, Yorikazu, Komaki-shi Aichi 485-8550 (JP); KATO, Kenichi, Komaki-shi Aichi 485-8550 (JP); SUZUKI, Takahisa, Yokohama-shi Kanagawa 244-0842 (JP)
(74) Representative: Kuhnen & Wacker
(86) International application number: PCT/JP2009/066965
(87) International publication number: WO 2010/038746

(56) References cited:
- DE-A1- 19 912 268
- DE-A1- 19 912 268
- GB-A- 2 317 434
- GB-A- 2 317 434
- JP-A- 2 132 127
- JP-A- 5 255 519
- JP-A- 6 234 886
- JP-A- 10 060 179
- JP-A- 63 057 310
- JP-A- 2003 214 431
- JP-A- 2003 214 431
- JP-A- 2003 214 431
- JP-A- 2005 200 015
- JP-U- 2 127 818
- US-A- 2 946 094
- US-A- 2 946 094
- US-A- 2 989 657
- US-A- 2 989 657
- US-A- 5 439 203
- US-A- 5 439 203

## Description

### TECHNICAL FIELD

The present invention relates an anti-vibration rubber member that is in sliding contact with a mating member that vibrates relative to the anti-vibration rubber member, and a production method thereof.

### BACKGROUND ART

A stabilizer bushing is an example of an anti-vibration rubber member. The stabilizer bushing is fixed to a vehicle body through a bracket. A stabilizer bar is also disposed in a holding hole of the stabilizer bushing.

For example, during turning of the vehicle, a centrifugal force causes the outer wheel side of the suspension to sink downward while the inner wheel side elongates. This twists the stabilizer bar. Utilizing an elastic restoring force against such torsion, the stabilizer bar works to lift up the outer wheel side of the suspension. Thus, the stabilizer bar maintains the vehicle horizontal.

When the stabilizer bar is twisted or when the twisted stabilizer bar recovers due to the elastic restoring force, the stabilizer bar outer circumferential surface and the stabilizer bushing inner circumferential surface slide relative to one another. Higher friction resistance during such sliding may cause more abnormal noise (a so-called stick slip noise), and may reduce the riding comfort of the vehicle.

In view of these points, a liner made of polytetrafluoroethylene (PTFE) with a small friction coefficient is conventionally inserted into a holding hole. The inner circumferential surface of the liner and the outer circumferential surface of the stabilizer bar then slidingly contact one another. However, the PTFE liner is relatively expensive. Therefore, if the PTFE liner is used, the cost of manufacturing the stabilizer bushing increases.

Hence, stabilizer bushings that do not require a PTFE liner have been developed. For example, Patent Document 1 describes a stabilizer bushing that has a rubber elastic body made of a self-lubricating rubber. The rubber elastic body is provided with a holding hole, and the stabilizer bar is disposed in the holding hole. According to the stabilizer bar of Patent Document 1, a fatty acid amide that comprises a component of the self-lubricating rubber oozes onto the inner circumferential surface of the holding hole, thereby reducing the friction resistance between the stabilizer bushing and the stabilizer bar.

Patent Document 2 describes a stabilizer bushing that includes a rubber elastic body made of a self-lubricating rubber, and a lubricant. The rubber elastic body is provided with a holding hole, and the stabilizer bar is disposed in the holding hole. The inner circumferential surface of the holding hole is formed with grid-like ribs. The lubricant is held in recess portions formed between the grid-like ribs. An ability to retain the lubricant is increased by the recess portions functioning as lubricant reservoir portions. According to the stabilizer bushing of Patent Document 2, the lubricant can be continuously and smoothly supplied between the stabilizer bushing and the stabilizer bar. Therefore, the friction resistance between the stabilizer bushing and the stabilizer bar can also be reduced. It should be noted that, in paragraph [0026] of Patent Document 2, a dry coating film that contains particles having a lubricating property such as molybdenum particles is disclosed as an example of the lubricant.

### Prior Art Documents

### Patent Documents

Patent Document 1: Japanese Patent Application Publication No. JP-A-H05-255519
Patent Document 2: Japanese Patent Application Publication No. JP-A-2006-273181

### DISCLOSURE OF THE INVENTION

### Problem to be Solved by the Invention

However, in the case of the stabilizer bushing according to Patent Document 1, the adoption of a self-lubricating rubber alone does not necessarily guarantee that the friction resistance between the stabilizer bushing and the stabilizer bar will be reduced to a satisfactory level.

In the case of the stabilizer bushing according to Patent Document 2, the inner circumferential surface of the holding hole must be formed with the grid-like ribs, thus making the shape of the inner circumferential surface more complex. If a dry coating film covers the inner circumferential surface of the holding hole of the rubber elastic body made of a self-lubricating rubber, the bleeding lubricant oozing from the rubber elastic body causes the dry coating film to be more prone to separation from the inner circumferential surface of the holding hole. And the operation itself to dispose the dry coating film on the inner circumferential surface of the holding hole from which the bleeding lubricant oozes is difficult. On this point, there is no specific description in Patent Document 2 regarding the method of disposing the dry coating film on the inner circumferential surface of the holding hole.

An anti-vibration rubber member and a production method thereof according to the present invention were accomplished in view of the foregoing problems. Thus, it is an object of the present invention to provide an anti-vibration rubber member wherein there is low friction resistance between the anti-vibration rubber member and a mating member and a coating film is not prone to separation from a rubber elastic body, and a relatively simple production method thereof.

### Means for Solving the Problem

(1) In order to solve the above problem, the anti-vibration rubber member according to the present invention absorbs at least a portion of the vibration of a mating member and has a sliding surface that is relatively in sliding contact with the mating member. The anti-vibration rubber member is characterized by including: a rubber elastic body that is made of a self-lubricating rubber containing an elastomer and a bleeding lubricant; a coating film that covers at least a portion of a sliding inner surface that is among a surface of the rubber elastic body and disposed on an inner side of the sliding surface, contains a resin having at least one type of functional group selected from a mercapto group, a vinyl group, an epoxy group, a methacryloxy group, and an amino group, and is deformable to follow up deformation of the rubber elastic body; and a lubricating film that covers at least a portion of a surface of the coating film, is formed by the bleeding lubricant of the rubber elastic body penetrating the coating film and oozing onto the surface of the coating film, and forms at least a portion of the sliding surface (equivalent to claim 1).

The anti-vibration rubber member of the present invention includes the rubber elastic body, the coating film, and the lubricating film. Among these, the lubricating film is in sliding contact with the mating member. In cases where the lubricating film is insufficient on the sliding inner surface, the coating film containing the bleeding lubricant is exposed from this portion and comes into sliding contact with the mating member. Therefore, according to the anti-vibration rubber member of the present invention, primarily the lubricating film and supplementarily the coating film are in sliding contact with the mating member. In addition, the rubber elastic body is not in sliding contact with the mating member. Thus, there is low friction resistance between the anti-vibration rubber member and the mating member.

At least one type of functional group selected from a mercapto group, a vinyl group, an epoxy group, a methacryloxy group, and an amino group is introduced to the resin forming the coating film. These functional groups each have a high reactivity with the elastomer. To be more specific, the mercapto group has a particularly high reactivity with urethane rubber (U), butadiene rubber (BR), isoprene rubber (IR), ethylene-propylene rubber (EPDM), styrene-butadiene rubber (SBR), and nitrile butadiene rubber (NBR); the vinyl group has a particularly high reactivity with EPDM; the epoxy group has a particularly high reactivity with U, IIR, NBR, and SBR; the methacryloxy group has a particularly high reactivity with EPDM; and the amino group has a particularly high reactivity with NBR, IIR, and U. Thus, according to the anti-vibration rubber member of the present invention, the rubber elastic body and the coating film can be strongly joined (chemically bonded). Therefore, the coating film is not prone to separation from the rubber elastic body. The coating film also easily deforms to follow up deformation of the rubber elastic body.

(1-1) In the configuration of (1) above, the sliding inner surface is preferably shaped as a generally smooth surface. In the case of the stabilizer bushing of Patent Document 2, the lubricant is retained by the recess portion formed between the grid-like ribs. On the contrary, in the case of the anti-vibration rubber member of the present invention, the bleeding lubricant can be held by the coating film having permeability. Thus, the recess portion essential for the stabilizer bushing of Patent Document 2 is not necessary in the case of the anti-vibration rubber member of the present invention (however, a recess portion may be included in the configuration of (1) above).

In view of this point, the sliding inner surface of the present configuration is shaped as a generally smooth surface (i.e., a surface without artificial unevenness; a flat surface is obviously acceptable and a curved surface is also acceptable). There is thus no need to form a recess portion on the sliding inner surface.

In the case of the stabilizer bushing of Patent Document 2, a top portion of the grid-like ribs comes into sliding contact (linear contact) with the stabilizer bar. A relatively high surface pressure is applied by the stabilizer bar to the top portion of the rib. Therefore, the top portion of the rib is prone to wear, and the rubber elastic body consequently has low durability.

On the contrary, the sliding inner surface of the present invention is not formed with an unevenness. Therefore, the sliding inner surface is in generally total surface contact with the mating member through the coating film and the lubricating film (and, depending on the case, only through the coating film). Thus, the rubber elastic body has high durability.

(2) In the configuration of (1) above, the coating film preferably further contains a solid lubricant (equivalent to claim 2). According to the present configuration, the friction resistance of the coating film itself is low with respect to the mating member. Therefore, even if there is a portion with insufficient lubricating film on the sliding surface, the friction resistance between the anti-vibration rubber member and the mating member can be reduced.

(3) In the configuration of (2) above, the solid lubricant is preferably made of polytetrafluoroethylene (equivalent to claim 3). Polytetrafluoroethylene has a particularly small friction coefficient even in a solid lubricant. Therefore, according to the present configuration, the friction resistance of the coating film itself with respect to the mating member can be further reduced.

(4) In the configuration of (3) above, the coating film preferably contains 200 parts by mass or less of the solid lubricant per 100 parts by mass of the resin (equivalent to claim 4). Here, the reason for including 200 parts by mass or less of the solid lubricant is because more than 200 parts by mass of the solid lubricant makes the coating film more susceptible to wear. In other words, because the durability of the coating film would decrease.

(4-1) In the configuration of (4) above, the coating film preferably includes 160 parts by mass or less of the solid lubricant, whereby the durability of the coating film can be maintained while reducing the friction resistance of the coating film with respect to the mating member.

(4-2) In the configuration of (4-1) above, the coating film preferably includes at least 110 and no more than 130 parts by mass of the solid lubricant. Here, the reason for including at least 110 parts by mass of the solid lubricant is because the friction resistance of the coating film with respect to the mating member increases if less than 110 parts by mass of the solid lubricant is included. Further, the reason for including no more than 130 parts by mass of the solid lubricant is because the coating film becomes more susceptible to wear if more than 130 parts by mass of the solid lubricant is included. According to the present configuration, the durability of the coating film can be maintained while reducing the friction resistance of the coating film with respect to the mating member.

(5) In the configuration of any one of (1) to (4) above, the resin is preferably a silicone resin (equivalent to claim 5). According to the present configuration, the coating film is formed with the silicone resin included. This facilitates penetration of the coating film by the bleeding lubricant of the rubber elastic body. Thus, the lubricating film can be surely formed on at least a portion of the surface of the coating film. In addition, the coating film is relatively flexible because the coating film is formed with the silicone resin included. Therefore, the coating film also easily deforms to follow up deformation of the rubber elastic body.

(6) In the configuration of (5) above, the silicone resin preferably has a less dense cross-linked structure than a straight silicone resin and a modified product thereof, and has rubber elasticity (equivalent to claim 6).

Here, a "straight silicone resin" refers to a silicone resin that includes only a methyl group, and a silicone resin that includes only a methylphenyl group. A "modified product of the straight silicone resin" includes an epoxy-modified silicone resin, an alkyd-modified silicone resin, a polyester-modified silicone resin, a silica-modified silicone resin, an acrylic-modified silicone resin, and the like. A silicone resin that "has rubber elasticity" includes a silicon resin mixed with rubber and a silicone resin with rubber elasticity that are used in a rubber coating agent or the like.

According to the present configuration, the cross-linked structure of the silicone resin is not dense, whereby the bleeding lubricant of the rubber elastic body can even more easily penetrate the coating film. Thus, the lubricating film can be even more surely formed on at least a portion of the surface of the coating film.

(7) In the configuration of any one of (1) to (6) above, the rubber elastic body preferably has a holding hole in which the mating member is disposed, and the sliding inner surface is preferably an inner circumferential surface of the holding hole (equivalent to claim 7).

According to the present configuration, the friction resistance of the inner circumferential surface of the holding hole with respect to an outer circumferential surface of the mating member can be reduced. Therefore, a torsional torque applied from the outer circumferential surface of the mating member to the inner circumferential surface of the holding hole can be reduced.

(8) In order to solve the above problem, the production method of the anti-vibration rubber member according to the present invention is a production method of an anti-vibration rubber member that absorbs at least a portion of the vibration of a mating member and has a sliding surface that is relatively in sliding contact with the mating member. The production method of an anti-vibration rubber member characterized by including the steps of: creating a rubber elastic body that is made of a self-lubricating rubber containing an elastomer and a bleeding lubricant through a cross-linking reaction; degreasing a sliding inner surface that is among a surface of the rubber elastic body and disposed on an inner side of the sliding surface; coating on the sliding inner surface after degreasing a coating that contains a thermosetting resin having at least one type of functional group selected from a mercapto group, a vinyl group, an epoxy group, a methacryloxy group, and an amino group; and baking the rubber elastic body coated with the coating such that a coating film including the coating is formed on the sliding inner surface, and the bleeding lubricant of the rubber elastic body penetrates the coating film and oozes onto a surface of the coating film to form a lubricating film including the bleeding lubricant on the surface of the coating film (equivalent to claim 8).

In other words, the production method of an anti-vibration rubber member according to the present invention has a cross-linking process, a degreasing process, a coating process, and a baking process. In the cross-linking process, the rubber elastic body is created through a cross-linking reaction. In the degreasing process, the sliding inner surface is degreased in order to temporarily remove the bleeding lubricant oozing from the sliding inner surface. In the coating process, the coating is coated (which includes coating by brushing or the like and also application by spraying or the like) on the sliding inner surface from which the bleeding lubricant is removed. In the baking process, the coating is hardened by heat and forms the coating film on the sliding inner surface of the rubber elastic body. The coating film is strongly joined (chemically bonded) to the rubber elastic body through the use of at least one type of functional group selected from the mercapto group, the vinyl group, the epoxy group, the methacryloxy group, and the amino group. The bleeding lubricant of the rubber elastic body penetrates the coating film and oozes onto the surface of the coating film. The lubricating film is formed on the surface of the coating film by the bleeding lubricant. Note that the coating film and the rubber elastic body are strongly joined. There is thus little risk of the bleeding lubricant oozing from an interface between the coating film and the rubber elastic body.

According to the production method of an anti-vibration rubber member of the present invention, a particularly difficult-to-form lubricating film can be relatively easily formed by a chemical bond using at least one type of functional group selected from the mercapto group, the vinyl group, the epoxy group, the methacryloxy group, and the amino group. It is thus relatively easy to create an anti-vibration rubber member wherein there is low friction resistance between the anti-vibration rubber member and a mating member and a coating film is not prone to separation from a rubber elastic body.

### Effect of the Invention

According to the present invention, an anti-vibration rubber member can be provided, wherein there is low friction resistance between the anti-vibration rubber member and a mating member and a coating film is not prone to separation from a rubber elastic body. Further, according to the present invention, a relatively simple production method for the anti-vibration rubber member can be provided.

### BRIEF DESCRIPTION OF THE DRAWINGS

[FIG. 1] FIG. 1 is a layout drawing of a stopper according to a first embodiment.
[FIG. 2] FIG. 2 is an axial cross-sectional view of the stopper and a lower arm bushing mounted to a bracket.
[FIG. 3] FIG. 3 is a perspective view of the stopper.
[FIG. 4] FIG. 4 is an exploded perspective view of the stopper.
[FIG. 5] FIG. 5 is an enlarged view of inside a box V in FIG. 2.
[FIG. 6] FIG. 6 is an enlarged cross-sectional view of a rubber elastic body after a cross-linking process, but before a degreasing process.
[FIG. 7] FIG. 7 is an enlarged cross-sectional view of the rubber elastic body after the degreasing process, but before a coating process.
[FIG. 8] FIG. 8 is an enlarged cross-sectional view of the rubber elastic body after the coating process, but before a baking process.
[FIG. 9] FIG. 9 is an enlarged cross-sectional view of the rubber elastic body during the baking process.
[FIG. 10] FIG. 10 is an enlarged cross-sectional view of the stopper after the baking process.
[FIG. 11] FIG. 11 is a layout drawing of a stabilizer bushing according to a second embodiment.
[FIG. 12] FIG. 12 is a composite perspective view of the stabilizer bushing and the bracket.
[FIG. 13] FIG. 13 is an exploded perspective view of the stabilizer bushing and the bracket.
[FIG. 14] FIG. 14 is a cross-sectional view in the direction of a line XIV-XIV in FIG. 12.
[FIG. 15] FIG. 15 is an enlarged view of inside a box XV in FIG. 14.

### BEST MODES FOR CARRYING OUT THE INVENTION

Hereinafter, embodiments of an anti-vibration rubber member and a production thereof according to the present invention will be described.

### <First Embodiment>

The present embodiment practices the anti-vibration rubber member of the present invention as a stopper.

### [Stopper Layout]

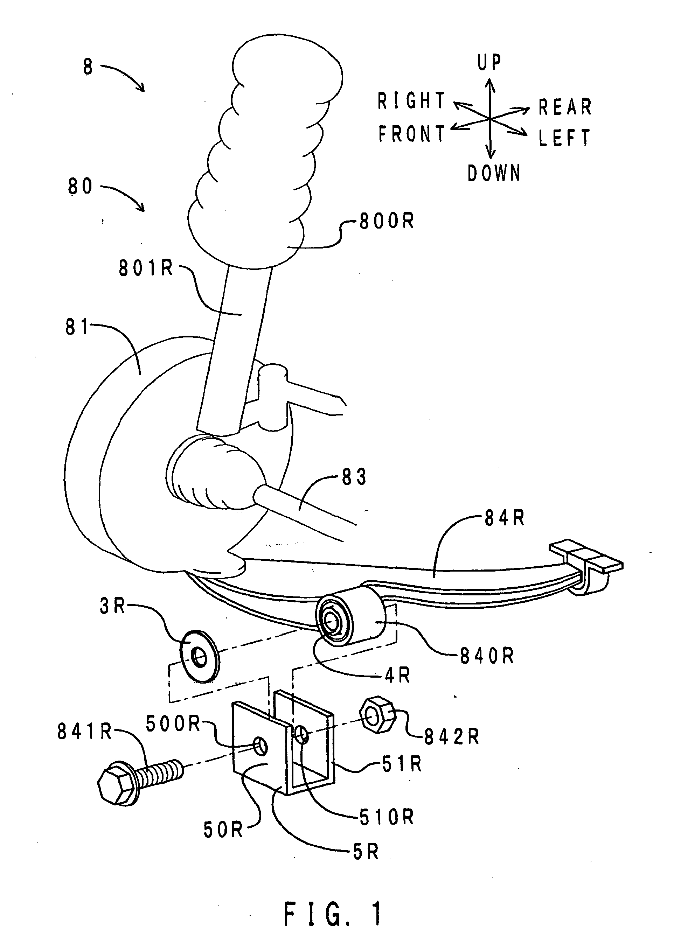

First, the layout of the stopper according to the present embodiment will be described. FIG. 1 shows a layout drawing of the stopper according to the present embodiment. As shown in FIG. 1, members including a suspension 80, a hub unit 81, and a drive shaft 83 are arranged in the vicinity of a front wheel of a vehicle 8. The suspension 80 includes a spring 800R, a shock absorber 801R, a lower suspension arm 84R, and the like. The lower suspension arm 84R is made of steel and has a generally flat V-shaped configuration. A front end (an end of the V shape) of the lower suspension arm 84R is formed with a bushing accommodation tube portion 840R. A lower arm bushing 4R is press-fit to an inner portion of the bushing accommodation tube portion 840R. A stopper 3R is disposed in front of the lower arm bushing 4R. A bracket 5R is made of steel and has a C-shaped configuration that opens upward. The bracket 5R is fixed to a body (not shown) of the vehicle 8. The stopper 3R and the bushing accommodation tube portion 840R (lower arm bushing 4R) are accommodated in an inner portion of the C-shaped opening of the bracket 5R. The stopper 3R and the lower arm bushing 4R are oscillatably attached to the bracket 5R by a bolt 841R and a nut 842R. The stopper 3R suppresses the bushing accommodation tube portion 840R from coming into direct sliding contact with the bracket 5R. The bushing accommodation tube portion 840R is included in the concept of a mating member of the present invention.

### [Stopper Structure]

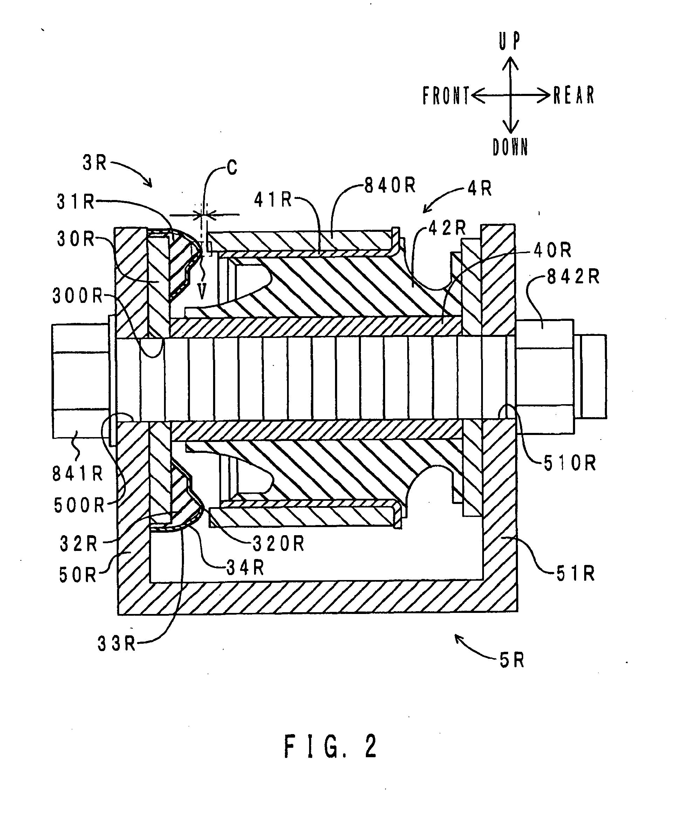

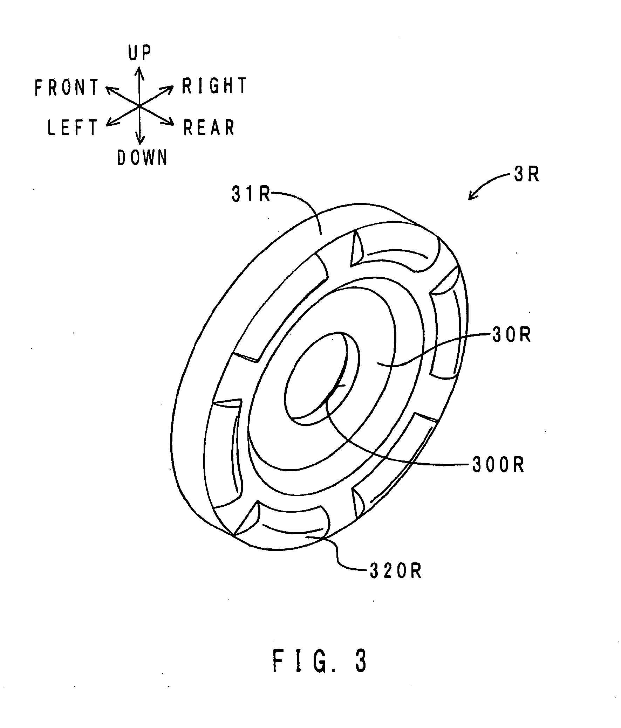

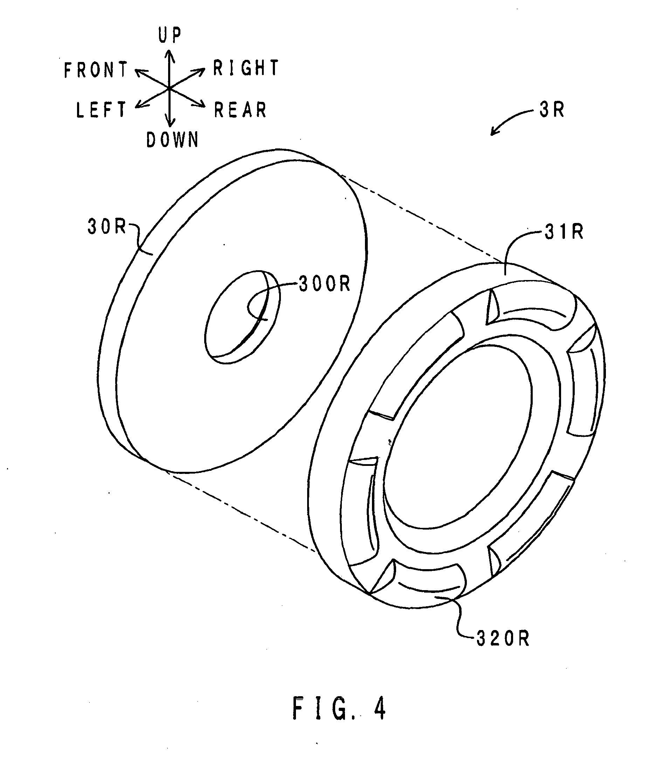

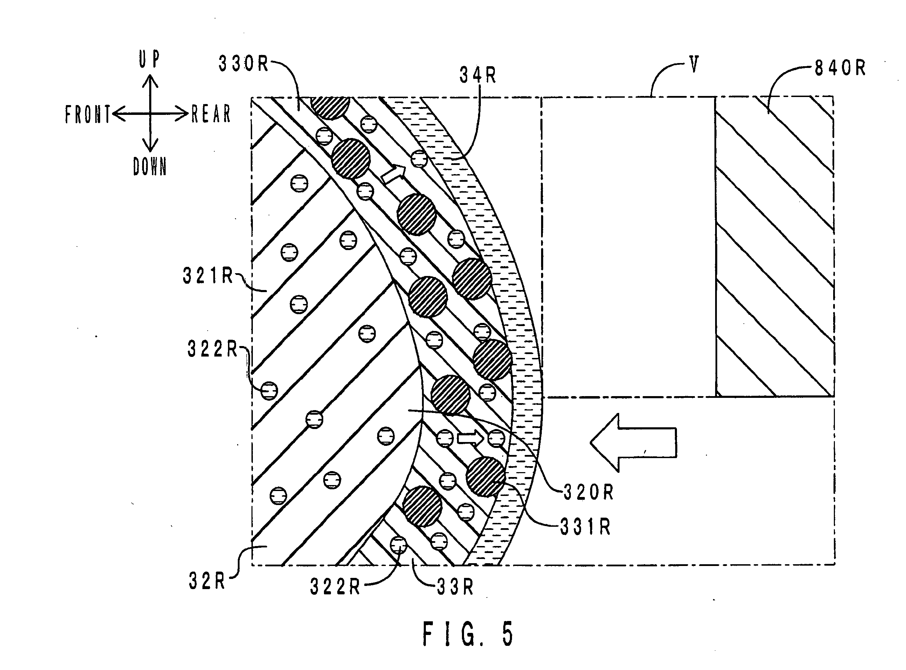

Next, the structure of the stopper 3R according to the present embodiment will be described. FIG. 2 shows an axial (longitudinal) cross-sectional view of the stopper and the lower arm bushing mounted to the bracket according to the present embodiment. FIG. 3 shows a perspective view of the stopper according to the present embodiment. FIG. 4 shows an exploded perspective view of the stopper according to the present embodiment. FIG. 5 shows an enlarged view of inside a box V in FIG. 2. Note that FIG. 5 is a schematic diagram for explaining the function of the stopper 3R of the present embodiment. As shown in FIGS. 2 to 5, the stopper 3R of the present embodiment includes a circular disc 30R and a rubber member body 31R.

The circular disc 30R is made of steel and has a ring shape. A bolt insertion hole 300R is formed at the center of the circular disc 30R. A bolt 841R is inserted into an inner portion of the bolt insertion hole 300R.

The rubber member body 31R includes a rubber elastic body 32R, a coating film 33R, and a lubricating film 34R. The rubber elastic body 32R has a ring shape. The rubber elastic body 32R is disposed so as to cover the rear surface and the outer circumferential surface of the circular disc 30R. The rubber elastic body 32R and the circular disc 30R are bonded together by cross-linking. The rear surface of the rubber elastic body 32R is formed with a plurality of ribs 320R. The plurality of ribs 320R is arranged in a circular configuration. The plurality of ribs 320R is also arranged in series to form a dashed line. The surface of the rib 320R is included in the concept of a sliding inner surface of the present invention. The surface of the rib 320R has a predetermined curvature and is shaped as a generally smooth surface. The coating film 33R covers the surface of the rubber elastic body 32R. The coating film 33R has a thickness of approximately 20 µm. The lubricating film 34R is in liquid form and covers the surface of the coating film 33R.

### [Stopper Material]

Next, the material of the stopper 3R according to the present embodiment will be described with reference to FIG. 5. The rubber elastic body 32R is made of a self-lubricating rubber. The rubber elastic body 32R includes a blended rubber (referred to simply as a "blend rubber" below) 321R of a natural rubber (NR) and a butadiene rubber (BR); and an oleic acid amide 322R. The blend rubber 321R is included in the concept of an elastomer of the present invention. The oleic acid amide 322R is included in the concept of a bleeding lubricant of the present invention.

The coating film 33R (made of SOLVEST 398 from STT, Inc., for example) includes a silicone resin 330R having a mercapto group, and a solid lubricant 331R made of PTFE. 120 parts by mass of the solid lubricant 331R are included per 100 parts by mass of the silicone resin 330R. The solid lubricant 331R has a generally spherical shape with a particle diameter (median diameter) of approximately 1 µm or less, wherein the average particle diameter is approximately 0.5 µm.

The lubricating film 34R is formed by the oleic acid amide 322R of the rubber elastic body 32R. That is, the oleic acid amide 322R of the rubber elastic body 32R penetrates the coating film 33R, as shown by white arrows in FIG. 5. The oleic acid amide 322R then oozes onto the surface of the coating film 33R. The lubricating film 34R is thus formed by the oleic acid amide 322R that oozed out.

### [Lower Arm Bushing and Bracket Structure]

Next, the structure of the lower arm bushing 4R and the bracket 5R according to the present embodiment will be briefly described with reference to FIG. 2. The lower arm bushing 4R includes an inner tube fitting 40R, an outer tube fitting 41R, and a rubber member 42R. The inner tube fitting 40R is made of steel and has a cylindrical shape. The bolt 841R is inserted into an inner portion of the inner tube fitting 40R. The outer tube fitting 41R is made of steel and has a cylindrical shape. The outer tube fitting 41R is disposed on a radial outer side of the inner tube fitting 40R. The outer tube fitting 41R is also press-fit to the bushing accommodation tube portion 840R. The rubber member 42R is made of rubber and interposed between the inner tube fitting 40R and the outer tube fitting 41R. The rubber member 42R, the inner tube fitting 40R, and the outer tube fitting 41R are bonded together by cross-linking.

The bracket 5R includes a front wall 50R and a rear wall 51R. A bolt insertion hole 500R is provided in the front wall 50R. A bolt insertion hole 510R OR is provided in the rear wall 51 R. The bolt 841R passes through the bolt insertion hole 500R, the bolt insertion hole 300R, an inner portion of the inner tube fitting 40R, and the bolt insertion hole 10R. The nut 842R is threadedly fastened to a penetrating end (rear end) of the bolt 841R.

As shown in FIG 2, a predetermined clearance C is secured between the stopper 3R and the bushing accommodation tube portion 840R. However, as a white arrow in FIG. 5 shows, the bushing accommodation tube portion 840R may slide forward with respect to the outer circumferential surface of the outer tube fitting 41R. In such cases, the rear surface of the stopper 3R (specifically, the surface of the lubricating film 34R covering the vicinity of a top portion of the rib 320R (and the surface of the coating film 33R at portions insufficiently covered by the lubricating film 34R)) is relatively in sliding contact with the front end surface of the bushing accommodation tube portion 840R.

### [Stopper Production Method]

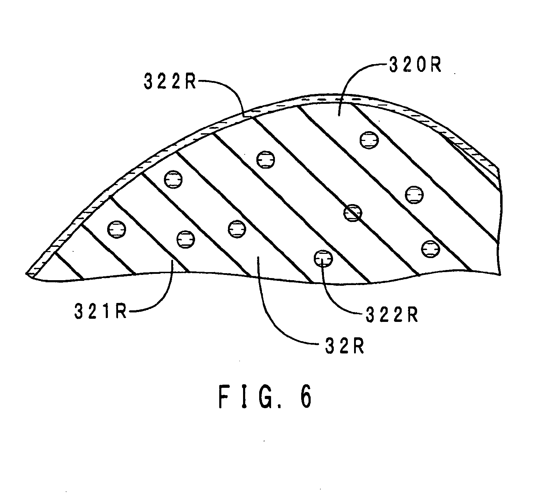

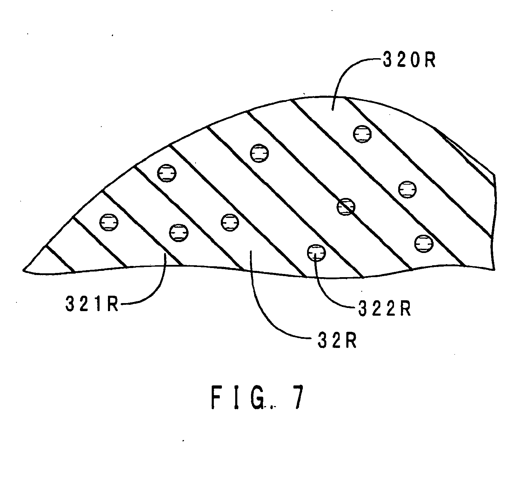

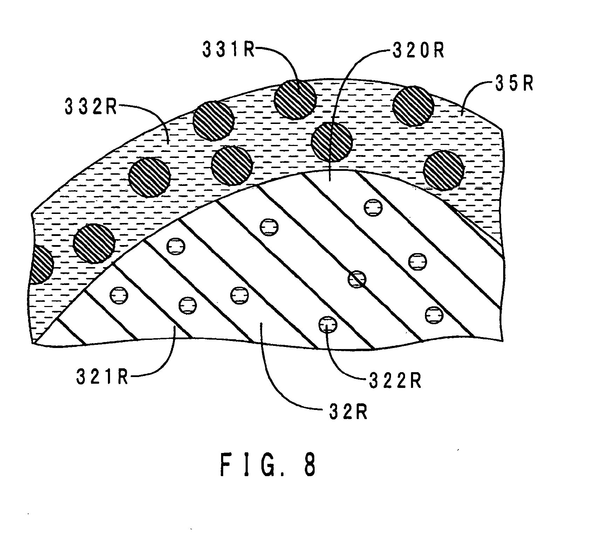

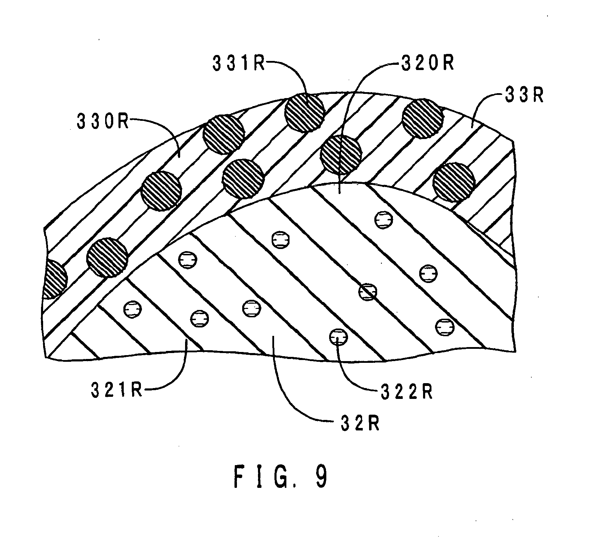

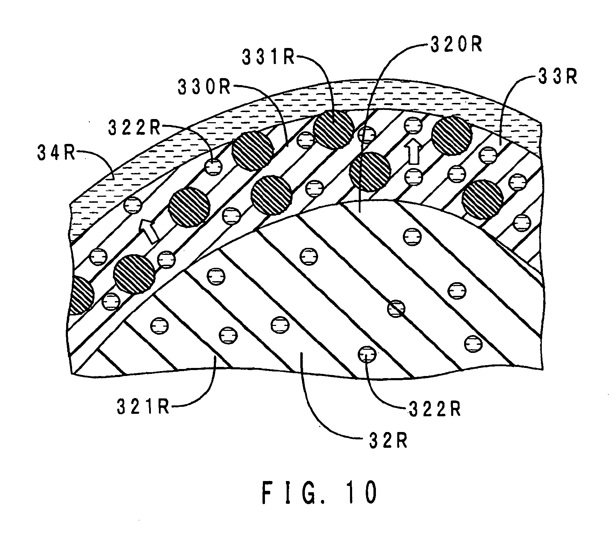

Next, a production method of the stopper 3R according to the present embodiment will be described. The production method of the stopper 3R according to the present embodiment includes a composition preparation process, a cross-linking process, a degreasing process, a coating process, and a baking process. FIG. 6 shows an enlarged cross-sectional view of the rubber elastic body after the cross-linking process, but before the degreasing process. FIG. 7 shows an enlarged cross-sectional view of the rubber elastic body after the degreasing process, but before the coating process. FIG. 8 shows an enlarged cross-sectional view of the rubber elastic body after the coating process, but before the baking process. FIG. 9 shows an enlarged cross-sectional view of the rubber elastic body during the baking process. FIG. 10 shows an enlarged cross-sectional view of the stopper according to the present embodiment after the baking process. Note that FIGS. 6 to 10 all show a region that corresponds to FIG. 5 (the region in FIG 5 is rotated 90 degrees in FIGS. 6 to 10).

In the composition preparation process, a composition is prepared by mixing together a base material of the blend rubber 321R, the oleic acid amide 322R, a cross-linking agent, and the like.

In the cross-linking process, first, the circular disc 30R (see FIG. 2) is disposed in a cavity. The composition is then injected into a mold cavity. Next, the base material of the blend rubber 321R inside the cavity undergoes a cross-linking reaction by maintaining the mold at 160°C for 8 minutes. Thereafter, the mold is opened and an intermediate, in which the rubber elastic body 32R and the circular disc 30R are bonded by cross-linking, is retrieved from the cavity. As shown in FIG. 6, the oleic acid amide 322R oozes onto the surface of the rubber elastic body 32R.

In the degreasing process, the surface of the rubber elastic body 32R is degreased using isopropyl alcohol (IPA). As shown in FIG. 7, the oleic acid amide 322R is thus removed from the surface of the rubber elastic body 32R.

In the coating process, as shown in FIG. 8, the surface of the cleaned rubber elastic body 32R is coated with a coating 35R. The coating 35R contains a base material 332R of the silicone resin 330R having a mercapto group, and the solid lubricant 331R made of PTFE.

In the baking process, the rubber elastic body 32R coated with the coating 35R is baked at 100°C for 30 minutes. Baking thermally hardens the base material 332R shown in FIG. 8. Then, as shown in FIG. 9, the coating film 33R forms on the surface of the rubber elastic body 32R. The oleic acid amide 322R of the rubber elastic body 32R penetrates the coating film 33R, as shown in FIG. 10. The lubricating film 34R is subsequently formed on the surface of the coating film 33R by the oleic acid amide 322R that penetrated the coating film 33R. Thus, the stopper 3R according to the present invention is produced.

### [Operation and Effects]

Next, the operation and effects of the stopper 3R and the production method thereof according to the present embodiment will be described. The lubricating film 34R of the stopper 3R according to the present embodiment is in sliding contact with the bushing accommodation tube portion 840R. In addition, for example, if a portion without a sufficient lubricating film 34R becomes part of the sliding surface due to a temporary lack of the lubricating film 34R or the like, the coating film 33R is exposed from the portion and in sliding contact with the bushing accommodation tube portion 840R. In other words, even if the lubricating film 34R is insufficient, the coating film 33R that contains the oleic acid amide 322R and the solid lubricant 331R is in sliding contact with the bushing accommodation tube portion 840R. Thus, in the stopper 3R of the present embodiment, the lubricating film 34R normally is in sliding contact with the bushing accommodation tube portion 840R. If the lubricating film 34R is insufficient, however, the coating film 33R is in sliding contact with the bushing accommodation tube portion 840R. In addition, the rubber elastic body 32R is not in sliding contact with the bushing accommodation tube portion 840R. Thus, there is low friction resistance between the rubber elastic body 32R and the bushing accommodation tube portion 840R.

A mercapto group (-SH) is introduced to the silicone resin 330R that forms the coating film 33R. The mercapto group is a functional group with high reactivity towards an elastomer. Therefore, according to the stopper 3R of the present embodiment, the rubber elastic body 32R and the coating film 33R can be strongly joined (chemically bonded). Therefore, the coating film 33R is not prone to separation from the rubber elastic body 32R. The coating film 33R also easily deforms to follow up deformation of the rubber elastic body 32R. In addition, the solid lubricant 331R is made of PTFE having a particularly small friction coefficient. Thus, in consideration of this point as well, the coating film 33R of the stopper 3R according to the present embodiment has low friction resistance with respect to the bushing accommodation tube portion 840R.

According to the stopper 3R of the present embodiment, 120 parts by mass of the solid lubricant 331R are included per 100 parts by mass of the silicone resin 330R. Therefore, the durability of the coating film 33R can be upheld while also reducing the friction resistance of the coating film 33R with respect to the bushing accommodation tube portion 840R.

According to the stopper 3R of the present embodiment, the resin that forms the coating film 33R is the silicone resin 330R. This facilitates penetration of the oleic acid amide 322R of the rubber elastic body 32R through the coating film 33R. Therefore, the lubricating film 34R can be surely formed on the surface of the coating film 33R. In addition, the coating film 33R is relatively flexible because the coating film 33R is formed with the silicone resin 330R included. Therefore, in consideration of this point as well, the coating film 33R easily deforms to follow up deformation of the rubber elastic body 32R.

The silicone resin 330R that forms the coating film 33R (made of SOLVEST 398 from STT, Inc., for example) is a silicone resin with rubber elasticity. The silicone resin 330R has a less dense cross-linked structure than a straight silicone resin and a modified product thereof, and the silicone resin 330R has rubber elasticity. This further facilitates penetration of the oleic acid amide 322R of the rubber elastic body 32R through the coating film 33R. Thus, the lubricating film 34R can be even more surely formed.

According to the stopper 3R of the present embodiment, the oleic acid amide 322R can be retained by the coating film 33R having permeability. There is thus no need to form a recess portion for retaining the oleic acid amide 322R on the rubber elastic body 32R as with the stabilizer bushing of Patent Document 2 above.

According to the stopper 3R of the present embodiment, the interface between the rubber elastic body 32R and the coating film 33R has a micro uneven configuration. In other words, at the interface, the rubber elastic body 32R and the coating film 33R mutually interlock. Therefore, due to a so-called "anchor effect", the rubber elastic body 32R and the coating film 33R can be strongly joined together.

In addition, according to the production method of the stopper 3R of the present embodiment, as shown in FIGS. 6 and 7, by degreasing the surface of the rubber elastic body 32R in the degreasing process, the oleic acid amide 322R oozing from the surface is temporarily removed. Therefore, as shown in FIG. 8, the coating 35R can be reliably coated on the surface of the rubber elastic body 32R in the coating process. Further, as shown in FIGS. 9 and 10, in the baking process, the coating film 33R and the rubber elastic body 32R can be strongly joined (chemically bonded) due to the mercapto group. Using the oleic acid amide 322R of the rubber elastic body 32R, the lubricating film 34R can also be formed on the surface of the coating film 33R

### <Second Embodiment>

The present embodiment practices the anti-vibration rubber member of the present invention as a stabilizer bushing.

### [Stabilizer Bushing Layout]

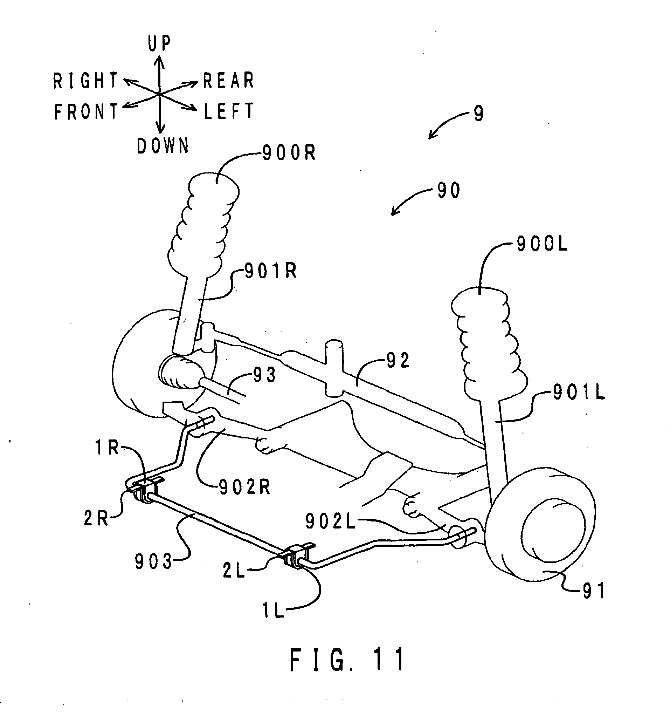

First, the layout of the stabilizer bushing according to the present embodiment will be described. FIG. 11 shows a layout drawing of the stabilizer bushing according to the present embodiment. As shown in FIG. 11, members including a suspension 90, a hub unit 91, a steering gear 92, and a drive shaft 93 are arranged in the vicinity of front wheels of a vehicle 9. The suspension 90 includes springs 900L, 900R, shock absorbers 901L, 901R, lower suspension arms 902L, 902R, a stabilizer bar 903, and the like. The stabilizer bar 903 is made of steel and has a long-axis pipe configuration that expands forward in a C shape. Both ends of the stabilizer bar 903 in the left-right direction are connected to the lower suspension arms 902L, 902R. Two left and right locations in a center portion of the stabilizer bar 903 are connected to a body (not shown) of the vehicle 9 through stabilizer bushings 1L, 1R and brackets 2L, 2R. Thus, the stabilizer bushings 1L, 1R are interposed between the stabilizer bar 903 and the body of the vehicle 9. The stabilizer bushings 1L, 1R suppress the transmission of vibrations input from the front wheels to the body of the vehicle 9 through the stabilizer bar 903. The stabilizer bar 903 is included in the concept of the mating member of the present invention.

### [Stabilizer Bushing Structure]

Next, the structure of the stabilizer bushings 1L, 1R according to the present embodiment will be described. The two left and right stabilizer bushings 1L, 1R have identical structures. The structure of the left stabilizer bushing 1L will be explained below, and this description also serves to explain the structure of the right stabilizer bushing 1R.

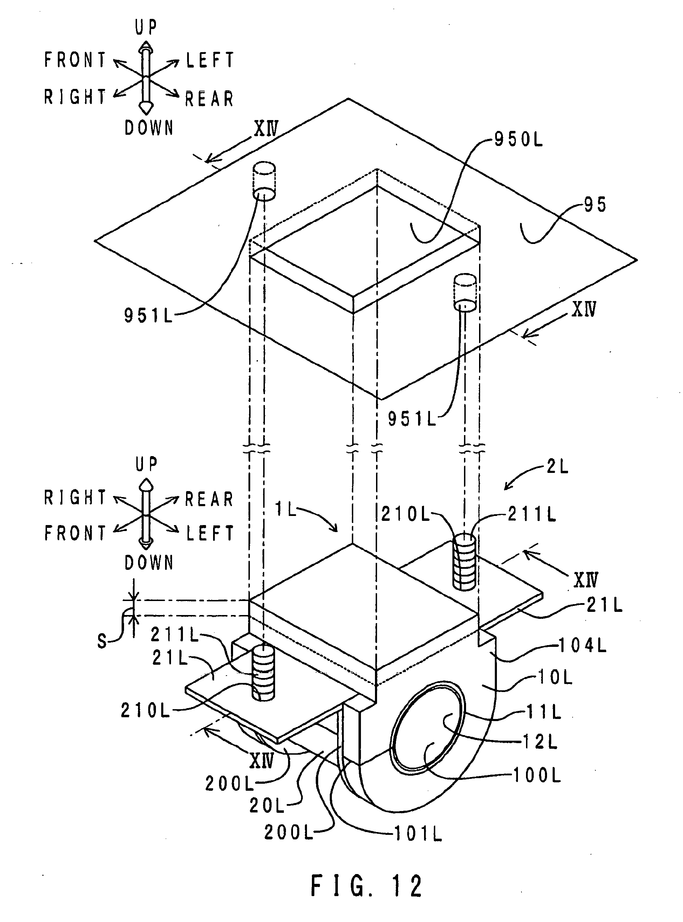

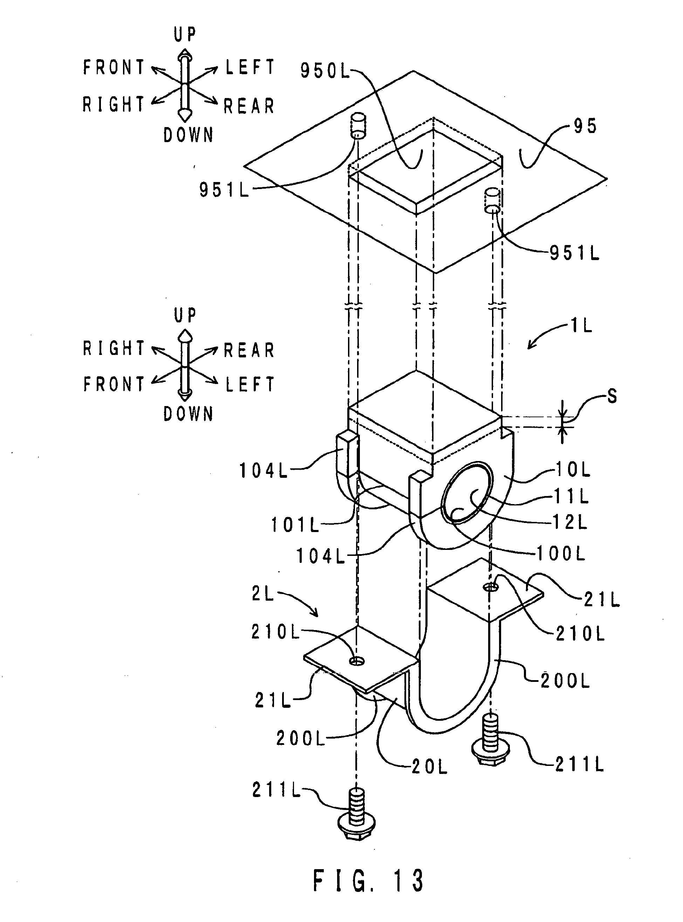

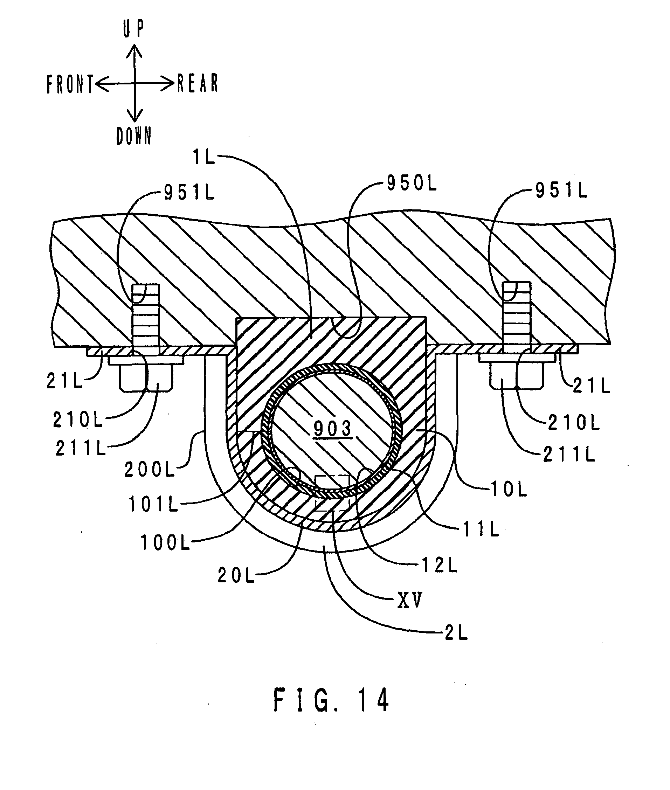

FIG. 12 shows a composite perspective view of the stabilizer bushing and the bracket according to the present embodiment. FIG 13 shows an exploded perspective view of the stabilizer bushing and the bracket according to the present embodiment. FIG. 14 shows a cross-sectional view in the direction of a line XIV-XIV in FIG. 12. As shown in FIGS. 12 to 14, the stabilizer bushing 1L of the present embodiment includes a rubber elastic body 10L, a coating film 11L, and a lubricating film 12L.

The rubber elastic body 10L has a solid U-shaped configuration when viewed from the left or right direction. In other words, an upper portion of the rubber elastic body 10L has a rectangular shape, and a lower portion of the rubber elastic body has a semicircular shape. The rubber elastic body 10L includes a holding hole 100L that passes through the rubber elastic body 10L in the left-right direction. The inner circumferential surface of the holding hole 100L is included in the concept of the sliding inner surface of the present invention. The inner circumferential surface of the holding hole 100L has a predetermined curvature and is shaped as a generally smooth surface. In other words, the inner circumferential surface of the holding hole 100L is not formed with an artificial unevenness (e.g. the grid-like ribs of Patent Document 2). An outer portion of the rubber elastic body 10L and an inner portion of the holding hole 100L communicate through a cut portion 101L. The stabilizer bar 903 is disposed in the holding hole 100L. The stabilizer bar 903 is inserted from an outer portion of the rubber elastic body 10L into an inner portion of the holding hole 100L through an opening that is formed by opening the cut portion 101L in the up-down direction. Both left and right edges of the rubber elastic body 10L are formed with a pair of flange portions 104L. The pair of flange portions 104L each have U-shaped configurations that open upward.

The coating film 11 L has a cylindrical shape. The coating film 11L covers the inner circumferential surface of the holding hole 100L. The coating film 11 L has a thickness (radial thickness) of approximately 20 µm. The lubricating film 12L is in liquid form and covers the surface (inner circumferential surface) of the coating film 11L. The surface of the lubricating film 12L (the surface of the coating film 11L if the lubricating film 12L is insufficient) is in contact with the outer circumferential surface of the stabilizer bar 903.

### [Stabilizer Bushing Material]

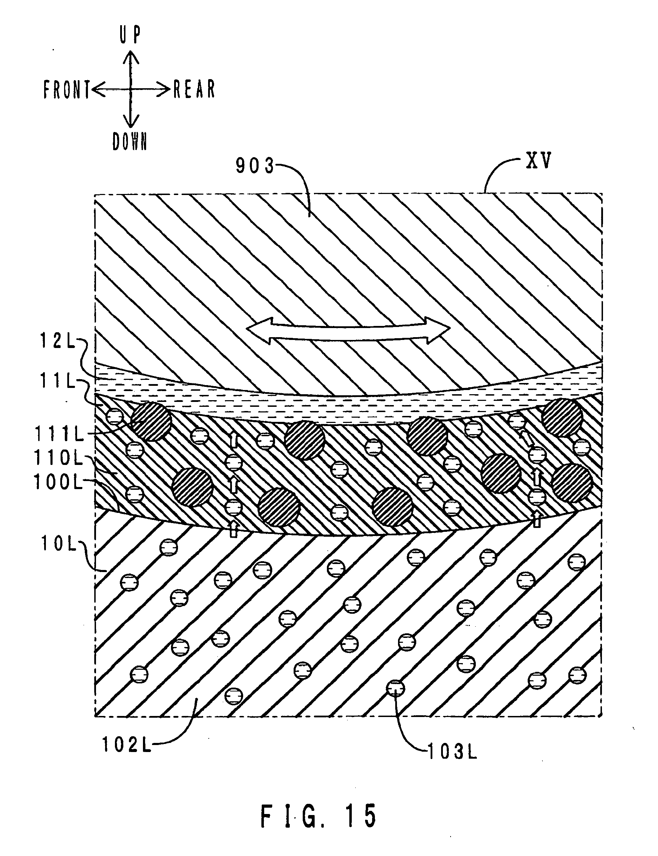

Next, the material of the stabilizer bushings 1L, 1R according to the present embodiment will be described. FIG. 15 shows an enlarged view of inside a box XV in FIG. 14. Note that FIG. 15 is a schematic diagram for explaining a function of the stabilizer bushings 1L, 1R according to the present embodiment.

The rubber elastic body 10L is made of a self-lubricating rubber. The rubber elastic body 10L includes a blended rubber (referred to simply as a "blend rubber" below) 102L of an NR and a BR; and an oleic acid amide 103L. The blend rubber 102L is included in the concept of an elastomer of the present invention. The oleic acid amide 103L is included in the concept of a bleeding lubricant of the present invention.

The coating film 11L (made of SOLVEST 398 from STT, Inc., for example) includes a silicone resin 110L having a mercapto group, and a solid lubricant 111 L made of PTFE. 120 parts by mass of the solid lubricant 111 L are included per 100 parts by mass of the silicone resin 110L. The solid lubricant 111 L has a generally spherical shape with a particle diameter (median diameter) of approximately 1 µm or less, wherein the average particle diameter is approximately 0.5 µm.

The lubricating film 12L is formed by the oleic acid amide 103L of the rubber elastic body 10L. That is, the oleic acid amide 103L of the rubber elastic body 10L penetrates the coating film 11L, as shown by white arrows in FIG 15. The oleic acid amide 103L then oozes onto the surface of the coating film 11L. The lubricating film 12L is thus formed by the oleic acid amide 103L that oozed out.

As shown by the white double-ended arrows in FIG. 15, the stabilizer bar 903 twists around an axis in accordance with the behavior of the vehicle 9. Meanwhile, the stabilizer bushing 1L is fixed to the body of the vehicle 9 through the bracket 2L that will be described later. Therefore, the surface of the lubricating film 12 (the surface of the coating film 11L if the lubricating film 12L is insufficient) is relatively in sliding contact with the outer circumferential surface of the stabilizer bar 903.

### [Bracket Structure]

Next, the structure of the brackets 2L, 2R according to the present embodiment will be described. The two left and right brackets 2L, 2R have identical structures. The structure of the left bracket 2L will be explained below, and this description also serves to explain the structure of the right bracket 2R. As shown in FIGS. 12 to 14, the bracket 2L of the present embodiment is made of steel and includes a bushing support portion 20L, and a pair of fixing portions 21L.

The bushing support portion 20L has a U-shaped configuration that opens upward when viewed from the left or right direction. Both left and right edges of the bushing support portion 20L are formed with a pair of flange portions 200L. A portion between the pair of flange portions 104L of the stabilizer bushing 1L is accommodated in an inner portion of the U-shaped opening of the bushing support portion 20L. The inner sides in the left-right direction of the pair of flange portions 200L contact the pair of flange portions 104L. Through such contact, separation of the stabilizer bushing 1L from the bracket 2L in the left-right direction can be suppressed.

Each of the pair of fixing portions 21L has a rectangular plate configuration. The pair of fixing portions 21L continues from both ends of the U-shaped bushing support portion 20L. A bolt insertion hole 210L is provided in each of the pair of fixing portions 21 L, and a bolt 211 L is inserted from below into each of the pair of bolt insertion holes 210L. Meanwhile, a recess portion 950L and a pair of bolt securing holes 951L are disposed on the lower surface of a body 95 of the vehicle 9. The space in an inner portion of the recess portion 950L has a cubic shape. The upper portion of the stabilizer bushing 1L is inserted into the recess portion 950L. The pair of bolt securing holes 951L is arranged in the front-rear direction of the recess portion 950L. The bolt 211 L passes through the bolt insertion hole 210L and is threadedly fastened in the bolt securing hole 951 L. Thus, the bracket 2L is fixed to the lower surface of the body 95 by the pair of bolts 211L. In addition, the stabilizer bushing 1L is held and fixed between the bracket 2L and the lower surface of the body 95. During such fixing, the upper portion of the rubber elastic body 10L is compressed and deformed by a fastening amount S (see FIGS. 12 and 13). Through the fastening amount S, the stabilizer bushing 1L is in press-contact with the outer circumferential surface of the stabilizer bar 903.

### [Stabilizer Bushing Production Method]

A production method of the stabilizer bushings 1L, 1R according to the present embodiment is identical to the production method of the stopper according to the first embodiment, except that there is no need to insert the circular disc 30R (see FIG. 2) into the cavity in the cross-linking process. Thus, a description of the production method will not be included here.

### [Operation and Effects]

Next, the operation and effects of the stabilizer bushings 1L, 1R and the production method thereof according to the present embodiment will be described. With respect to portions with common structures, the stabilizer bushings 1L, 1R and the production method thereof according to the present embodiment have the same operation and effects as the stopper and the production method thereof according to the first embodiment.

According to the production method of the stabilizer bushings 1L, 1R of the present embodiment, the rubber elastic body 10L is first formed with the cut portion 101L, and then the coating film 11L and the lubricating film 12L are subsequently layered on the inner circumferential surface of the holding hole 100L. Therefore, the coating film 11L is less prone to detachment from the rubber elastic body 10L compared to the case of first layering the coating film 11L and the lubricating film 12L on the inner circumferential surface of the rubber elastic body 10L and then forming the cut portion 101L in the rubber elastic body 10L.

### <Other Embodiments>

Embodiments of the anti-vibration rubber member and the production method thereof according to the present invention were described above. However, the embodiments of the present invention are not particularly limited to the modes described above; various modifications and improvements may also be implemented by a person having ordinary skill in the art.

The rubber elastic bodies 32R, 10L are not particularly limited in terms of elastomer material. For example, NR, BR, isoprene rubber (IR), styrene-butadiene rubber (SBR), chloroprene rubber (CR), nitrile butadiene rubber (NBR), ethylene-propylene rubber (EPDM), butyl rubber (IIR), acrylic rubber (ACM), urethane rubber (U), silicone rubber, any blend material of these rubbers, and the like may be used.

The bleeding lubricant of the rubber elastic bodies 32R, 10L are not particularly limited in terms of material. For example, a fatty acid amid (an unsaturated fatty acid amide (oleic acid amide, erucic acid amide, or the like), a saturated fatty acid amide (stearic acid amide, behenic acid amide, or the like), a silicone oil, a polyethylene glycol surfactant, and the like may be used.

The resin of the coating films 33R, 11L are not particularly limited in terms of material. For example, polyester, acrylic, urethane, and the like may be used.

The functional group of the resin of the coating films 33R, 11L is also not particularly limited to the mercapto group. For example, a vinyl group, an epoxy group, a methacryloxy group, an amino group, and the like may be used. The functional group is preferably selected in accordance with the elastomer material of the rubber elastic bodies 32R, 10L.

The solid lubricant of the coating films 33R, 11L is not particularly limited in terms of material. For example, graphite, molybdenum disulfide, fluorine resin, and the like may be used. Examples of the fluorine resin include a tetrafluoroethylene-perfluoroalkoxy vinyl ether copolymer (PFA), a tetrafluoroethylene-hexafluoropropylene copolymer (FEP), polychlorotrifluoroethylene (PCTFE), a tetrafluoroethylene-ethylene copolymer (ETFE), a chlorotrifluoroethylene-ethylene copolymer (ECTFE), polyvinylidene fluoride (PVDF), polyvinyl fluoride (PVF), and the like.

In the above embodiments, the anti-vibration rubber member of the present invention is practiced as the stopper 3R for the lower suspension arm 84R and the stabilizer bushings 1L, 1R. However, the anti-vibration rubber member of the present invention may also be practiced as a stopper for an engine mount such as disclosed in Japanese Patent Application Publication Nos. JP-A-2005-106169 and JP-A-2005-249062, and a stopper for a differential mount such as disclosed in Japanese Patent Application Publication Nos. JP-A-2008-89002 and JP-A-2008-95785.

### Examples

Hereinafter, a torque test performed on the anti-vibration rubber member of the present invention will be described.

### [Samples]

As samples to be used in the test, the stabilizer bushing 1L (see FIGS. 12 to 15) according to the second embodiment was set with 4 different amounts of the solid lubricant 111L of the coating film 11L.

Example 1 had 0 parts by mass of the solid lubricant 111 L per 100 parts by mass of the silicone resin 110L. Example 2 had 120 parts by mass of the solid lubricant 111L per 100 parts by mass of the silicone resin 110L (i.e., Example 2 is the stabilizer bushing 1L of the second embodiment). Example 3 had 160 parts by mass of the solid lubricant 111L per 100 parts by mass of the silicone resin 110L. Example 4 had 200 parts by mass of the solid lubricant 111L per 100 parts by mass of the silicone resin 110L. A sample of only the rubber elastic body 10L (without the coating film 11L or the lubricating film 12L) was used as a Comparative Example.

### [Test Method]

First, each sample was fixed to a jig (equivalent to the lower surface of the body 95 of the vehicle 9 according to the second embodiment) by the bracket 2L. Next, a shaft (equivalent to the stabilizer bar 903 of the second embodiment) was inserted into the holding hole 100L of each sample. Using a torque wrench, the shaft was subsequently twisted by ±15 degrees around an axis. The torsional torque applied to the shaft was then measured. If the friction resistance between the shaft and the sample is low, the torsional torque applied to the shaft will be small. Conversely, if the friction resistance between the shaft and the sample is high, the torsional torque applied to the shaft will be large.

### [Test Results]

If the torsional torque of the Comparative Example is considered to be 100%, the torsional torque of Example 1 was 23%, the torsional torque of Example 2 was 25%, the torsional torque of Example 3 was 42%, and the torsional torque of Example 4 was 55%. It was thus found that the torsional torque of Examples 1 to 4 was smaller than that of the Comparative Example. In other words, there was less friction resistance between the sample and the shaft in Examples 1 to 4 than in the Comparative Example.

### Description of the Reference Numerals

1L: stabilizer bushing (anti-vibration rubber member), 1R: stabilizer bushing (anti-vibration rubber member), 2L: bracket, 2R: bracket, 3R: stopper (anti-vibration rubber member, 4R: lower arm bushing, 5R: bracket, 8: vehicle, 9: vehicle
10L: rubber elastic body, 11L: coating film, 12L: lubricating film, 20L: bushing support portion, 21 L: fixing portion, 30R: circular disc, 31R: rubber member body, 32R: rubber elastic body, 33R: coating film, 34R: lubricating film, 35R: coating, 40R: inner tube fitting, 41 R: outer tube fitting, 42R: rubber member, 50R: front wall, 5 1 R: rear wall, 80: suspension, 81: hub unit, 83: drive shaft, 84R: lower suspension arm, 90: suspension, 91: hub unit, 92: steering gear, 93: drive shaft, 95: body
100L: holding hole, 101L: cut portion, 102L: blend rubber (elastomer), 103L: oleic acid amide (bleeding lubricant), 104L: flange portion, 110L: silicone resin, 111L: solid lubricant, 200L: flange portion, 210L: bolt insertion hole, 211L: bolt, 300R: bolt insertion hole, 320R: rib, 321R: blend rubber (elastomer), 322R: oleic acid amide (bleeding lubricant), 330R: silicone resin, 331R: solid lubricant, 332R: base material, 500R: bolt insertion hole, 510R: bolt insertion hole, 800R: spring, 801R: shock absorber, 840R: bushing accommodation tube portion (mating member), 841R: bolt, 842R: nut, 900L: spring, 900R: spring, 901L: shock absorber, 901R: shock absorber, 902L: lower suspension arm, 902R: lower suspension arm, 903: stabilizer bar (mating member), 950L: recess portion, 951 L: bolt securing hole
C: clearance, S: fastening amount

## Claims

1. An anti-vibration rubber member (3R) that absorbs at least a portion of the vibration of a mating member (840R) and has a sliding surface that is relatively in sliding contact with the mating member, the anti-vibration rubber member **characterized by** comprising:
a rubber elastic body (32R) that is made of a self-lubricating rubber containing an elastomer (321R) and a bleeding lubricant (322R),
a coating film (33R) that covers at least a portion of a sliding inner surface that is between a surface of the rubber elastic body (32R) and an inner side of the sliding surface, contains a resin (330R) having at least one type of functional group selected from a mercapto group, a vinyl group, an epoxy group, a methacryloxy group, and an amino group, and is deformable to follow up deformation of the rubber elastic body; and
a lubricating film (34R) that covers at least a portion of a surface of the coating film, is formed by the bleeding lubricant of the rubber elastic body penetrating the coating film and oozing onto the surface of the coating film, and forms at least a portion of the sliding surface.

2. The anti-vibration rubber member according to claim 1, wherein the coating film (33R) further contains a solid lubricant.

3. The anti-vibration rubber member according to claim 2, wherein the solid lubricant is made of polytetrafluoroethylene.

4. The anti-vibration rubber member according to claim 3, wherein the coating film contains 200 parts by mass or less of the solid lubricant per 100 parts by mass of the resin.

5. The anti-vibration rubber member according to any one of claims 1 to 4, wherein the resin (330R) is a silicone resin.

6. The anti-vibration rubber member according to claim 5, wherein the silicone resin has a less dense cross-linked structure than a straight silicone resin and a modified product thereof, and has rubber elasticity.

7. The anti-vibration rubber member according to any one of claims 1 to 6, wherein the rubber elastic body (32R) has a holding hole (100L) in which the mating member (840R) is disposed, and the sliding inner surface is an inner circumferential surface of the holding hole.

8. A production method of an anti-vibration rubber member (3R) that absorbs at least a portion of the vibration of a mating member (840R) and has a sliding surface that is relatively in sliding contact with the mating member, the production method of an anti-vibration rubber member **characterized by** comprising the steps of:
creating a rubber elastic body (32R) that is made of a self-lubricating rubber containing an elastomer and a bleeding lubricant through a cross-linking reaction;
degreasing a sliding inner surface that is among a surface of the rubber elastic body and disposed on an inner side of the sliding surface;
coating on the sliding inner surface after degreasing a coating that contains a thermosetting resin having at least one type of functional group selected from a mercapto group, a vinyl group, an epoxy group, a methacryloxy group, and an amino group; and
baking the rubber elastic body coated with the coating such that a coating film (33R) comprising the coating is formed on the sliding inner surface, and the bleeding lubricant of the rubber elastic body penetrates the coating film and oozes onto a surface of the coating film to form a lubricating film (34R) comprising the bleeding lubricant on the surface of the coating film.

## Patentansprüche

1. Antivibrationsgummielement (3R), das zumindest einen Teil der Vibration eines Paarungselements (840R) absorbiert und eine Gleitfläche aufweist, die sich relativ mit dem Paarungselement in gleitendem Kontakt befindet, wobei das Antivibrationsgummielement **dadurch gekennzeichnet ist, dass** es aufweist:
einen elastischen Gummikörper (32R), der aus einem selbstschmierenden Gummi besteht, der ein Elastomer (321R) und einen Entlüftungsschmierstoff (322R) enthält;
einen Beschichtungsfilm (33R), der zumindest einen Teil einer inneren Gleitfläche abdeckt, der sich zwischen einer Fläche des elastischen Gummikörpers (32R) und einer Innenseite der Gleitfläche befindet, und der ein Harz (330R) aufweist, das zumindest eine Art von Funktionsgruppe aufweist, die aus einer Mercaptogruppe, einer Vinylgruppe, einer Epoxygruppe, einer Methacryloxygruppe und einer Aminogruppe ausgewählt wird und das verformbar ist, um der Verformung des elastischen Gummikörpers zu folgen; und
einen Schmierstofffilm (34R), der zumindest einen Teil einer Fläche des Beschichtungsfilms abdeckt und der von dem Entlüftungsschmierstoff des elastischen Gummikörpers gebildet wird, der den Beschichtungsfilm penetriert und auf die Fläche des Beschichtungsfilms sickert und der zumindest einen Abschnitt der Gleitfläche bildet.

2. Antivibrationsgummielement nach Anspruch 1, wobei der Beschichtungsfilm (33R) ferner einen festen Schmierstoff beinhaltet.

3. Antivibrationsgummielement nach Anspruch 2, wobei der feste Schmierstoff aus Polytetrafluorethylen besteht.

4. Antivibrationsgummielement nach Anspruch 3, wobei der Beschichtungsfilm 200 Masseanteile oder weniger des festen Schmierstoffs pro 100 Massenanteilen des Harzes beinhaltet.

5. Antivibrationsgummielement nach einem der Ansprüche 1 bis 4, wobei das Harz (330R) ein Silikonharz ist.

6. Antivibrationsgummielement nach Anspruch 5, wobei das Silikonharz eine weniger dichte vernetzte Struktur als ein reines Silikonharz und ein modifiziertes Produkt davon aufweist und eine Gummielastizität aufweist.

7. Antivibrationsgummielement nach einem der Ansprüche 1 bis 6, wobei der elastische Gummikörper (32R) ein Aufnahmeloch (1004) aufweist, in dem sich das Paarungselement (840R) befindet, und wobei die innere Gleitfläche eine innere Umlauffläche des Aufnahmelochs ist.

8. Produktionsverfahren für ein Antivibrationsgummielement (3R), das zumindest einen Teil der Vibration eines Paarungselements (840R) absorbiert und eine Gleitfläche aufweist, die sich relativ mit dem Paarungselement in gleitendem Kontakt befindet, wobei das Produktionsverfahren für ein Antivibrationsgummielement **dadurch gekennzeichnet ist, dass** es die folgenden Schritte aufweist:
Herstellen eines elastischen Gummikörpers (32R), der aus einem selbstschmierenden Gummi besteht, der ein Elastomer (321R) und einen Entlüftungsschmierstoff (322R) durch eine Vernetzungsreaktion enthält;
Entfetten einer inneren Gleitfläche, die sich zwischen einer Fläche des elastischen Gummikörpers befindet und sich auf einer Innenseite der Gleitfläche befindet;
Beschichten der inneren Gleitfläche nach dem Entfetten einer Beschichtung, die ein thermohärtendes Harz aufweist, das zumindest eine Art von Funktionsgruppe aufweist, die aus einer Mercaptogruppe, einer Vinylgruppe, einer Epoxygruppe, einer Methacryloxygruppe und einer Aminogruppe ausgewählt wird; und
Backen des elastischen Gummikörpers, der mit der Beschichtung beschichtet ist, so dass ein Beschichtungsfilm (33R), der die Beschichtung aufweist, auf der inneren Gleitfläche gebildet wird und der Entlüftungsschmierstoff des elastischen Gummikörpers den Beschichtungsfilm penetriert und auf eine Fläche des Beschichtungsfilms sickert, um einen Schmierfilm (34R) zu bilden, der den Entlüftungsschmierstoff auf der Fläche des Beschichtungsfilms aufweist.

## Revendications

1. Organe de caoutchouc antivibration (3R) qui absorbe au moins une portion de la vibration d'un organe d'accouplement (840R) et a une surface coulissante qui est relativement en contact coulissant avec l'organe d'accouplement, l'organe de caoutchouc antivibration étant **caractérisé en ce qu'**il comprend :
un corps élastique en caoutchouc (32R) qui est constitué d'un caoutchouc autolubrifiant contenant un élastomère (321R) et un lubrifiant de dégorgement (322R) ;
un film de revêtement (33R) qui couvre au moins une portion d'une surface interne coulissante qui se trouve entre une surface du corps élastique en caoutchouc (32R) et un côté interne de la surface coulissante, contient une résine (330R) ayant au moins un type de groupe fonctionnel choisi parmi un groupe mercapto, un groupe vinyle, un groupe époxy, un groupe méthacryloxy et un groupe amino, et peut être déformé pour suivre la déformation du corps élastique en caoutchouc ; et
un film lubrifiant (34R) qui couvre au moins une portion d'une surface du film de revêtement est formé par le lubrifiant de dégorgement du corps élastique en caoutchouc pénétrant le film de revêtement et suintant sur la surface du film de revêtement, et forme au moins une portion de la surface coulissante.

2. Organe de caoutchouc antivibration selon la revendication 1, dans lequel le film de revêtement (33R) contient en outre un lubrifiant solide.

3. Organe de caoutchouc antivibration selon la revendication 2, dans lequel le lubrifiant solide est fait de poly(tétrafluoroéthylène).

4. Organe de caoutchouc antivibration selon la revendication 3, dans lequel le film de revêtement contient 200 parties en masse ou moins du lubrifiant solide pour 100 parties en masse de la résine.

5. Organe de caoutchouc antivibration selon l'une quelconque des revendications 1 à 4, dans lequel la résine (330R) est une résine de silicone.

6. Organe de caoutchouc antivibration selon la revendication 5, dans lequel la résine de silicone a une structure réticulée moins dense qu'une résine de silicone droite et un produit modifié de celle-ci, et a une élasticité de caoutchouc.

7. Organe de caoutchouc antivibration selon l'une quelconque des revendications 1 à 6, dans lequel le corps élastique en caoutchouc (32R) a un trou de maintien (100L) dans lequel l'organe d'accouplement (840R) est disposé, et la surface interne coulissante est une surface circonférentielle interne du trou de maintien.

8. Procédé de production d'un organe de caoutchouc antivibration (3R) qui absorbe au moins une portion de la vibration d'un organe d'accouplement (840R) et a une surface coulissante qui est relativement en contact coulissant avec l'organe d'accouplement, le procédé de production d'un organe de caoutchouc antivibration étant **caractérisé en ce qu'**il comprend les étapes consistant à :
créer un corps élastique en caoutchouc (32R) qui est fait d'un caoutchouc autolubrifiant contenant un élastomère et un lubrifiant de dégorgement via une réaction de réticulation ;
dégraisser une surface interne coulissante qui fait partie d'une surface du corps élastique en caoutchouc et est disposée sur un côté interne de la surface coulissante ;
revêtir sur la surface interne coulissante après dégraissage un revêtement qui contient une résine thermodurcissable ayant au moins un type de groupe fonctionnel choisi parmi un groupe mercapto, un groupe vinyle, un groupe époxy, un groupe méthacryloxy, et un groupe amino ; et
cuire le corps élastique en caoutchouc revêtu avec le revêtement de sorte qu'un film de revêtement (33R) comprenant le revêtement est formé sur la surface interne coulissante, et le lubrifiant de dégorgement du corps élastique en caoutchouc pénètre le film de revêtement et suinte sur une surface du film de revêtement afin de former un film lubrifiant (34R) comprenant le lubrifiant de dégorgement sur la surface du film de revêtement.
